# EUROPEAN PATENT SPECIFICATION

(11) **EP 2 282 502 B1**
(45) Date of publication and mention of the grant of the patent: **10.05.2017**
(21) Application number: 09425313.5
(22) Date of filing: 31.07.2009
(51) Int. Cl.: H04M 7/00, H04M 3/42, H04L 29/06, H04L 29/08

(54) **Integration of heterogenous VoIP servers such as IP-PBX and presence servers**
Integration von heterogenen VoIP Servers sowie IP-PBX und presence Servers
Intégration de serveurs hétérogènes de VoIP tels qu'IP-PBX et de serveurs de présence

(43) Date of publication of application: 09.02.2011
(73) Proprietor: Accenture Global Services Limited, Dublin 4 (IE)
(72) Inventor: Capuozzo, Giuseppe, 00154 Rome (IT); Mario Pirillo, 00144 Rome (IT); Mattia Lavena, 00152 Rome (IT); Volino, Pietro, Villa d'Agri (IT)
(74) Representative: Müller-Boré & Partner Patentanwälte PartG mbB

(56) References cited:
- EP-A1- 2 007 105
- US-A1- 2005 068 167
- US-A1- 2005 123 117
- MICROSOFT CORPORATION - OFFICE COMMUNICATIONS SERVER GROUP: "Integrating Enterprise Telephony with Office Communications Server 2007 R2" , [Online] March 2009 (2009-03), pages 1-47, XP002561712 Retrieved from the Internet: URL:http://download.microsoft.com/download /f/8/8/f8827334-58c6-4cd3-8f68-f4254a7d568 c/OCS%20Telephony%20Integration%20WP%20FIN AL%20RELEASE.docx> [retrieved on 2009-12-28]
- AVAYA: "Avaya Intelligent Presence Server" , [Online] February 2008 (2008-02), pages 1-2, XP002561713 Retrieved from the Internet: URL:http://assets.devx.com/avaya/IPS_FactS heet.pdf> [retrieved on 2009-12-28]

## Description

### Technical Field

The description is directed generally to heterogeneous VoIP (voice over Internet Protocol) networks and presence server platforms, and, in particular, to an adaptation proxy integrable into a computer system, a computer system, a computer-implemented method, and computer program product for enabling presence and remote call control services between client devices served by different SIP servers such as VoIP servers and/or presence servers.

### Background

Both, VoIP networks, based on standard SIP signaling (e.g. IP (Internet Protocol) PBX (private branch exchange)) and presence servers or presence server platforms (e.g. Microsoft Office Communications Server, Avaya's Presence Server) are widely used. Both domains offer new kinds of services and support next generation communication solutions.

Hence, there might be a need to seamlessly integrate said different domains in order to provide more sophisticated and convergent services regardless of network platforms and/or client devices (e.g. hard-phones such as IP phones e.g. from Microsoft, Cisco, Avaya, Asterisk and/or instant messaging clients such as soft-phones, e.g. Microsoft Office Communicator (MOC)) used.

On the one hand, presence servers may integrate real-time communication media with user presence awareness, including Web conferencing (such as sharing data, audio, and/or video), instant messaging, and/or audio/video conversations.

On the other hand, a standard VoIP server such as an IP PBX may be a telephone system designed to deliver voice and/or video over a (data) network and may interoperate with the normal Public Switched Telephone Network (PSTN).

Integrating presence servers with standard VoIP servers such as IP PBX servers may be challenging. In particular, presence servers may not be designed to serve as an IP PBX server because users may use a variety of media communications (e.g. email, instant messaging, telephone, and/or voice-mail), while IP PBX servers may deliver telephone calls only.

To provide the flexibility that may be required to create an optimal individual and/or company telephony integration strategy, an additional (adaptation) layer may become necessary that may ensure the integration between different VoIP domains including presence servers and IP PBX servers which may use different implementations of the SIP protocol (e.g. different SIP message formats).

Document EP 2 007 105 A1 relates to an SIP adaptor which modifies the format of an SIP (session initiation protocol) message. A Sip message in a first format is received by the SIP adaptor form a first SIP server that is based on the first message format. The SIP adaptor modifies the SIP message to a second format and forwards the modified SIP message to a second SIP server that is based on a second message format.

Document Microsoft Cooperation - office communications server group "Integrated Enterprise Telephony with Office Communications Server 2007 R2", March 2009 relates to enterprise telephony integration using MS Office ® communications server.

Document AVAYA "Avaya Intelligent Presence Server", Feb. 2008 relates to a general description of a presence server. A presence server relates to a software platform that gather presence information from different providers, servers, and/or clients and then shares the presence information between those entities.

### Summary

According to one general aspect, an adaptation proxy according to claim 1 integrable into a computer system for enabling presence and remote call control services between client devices served by different SIP servers is provided. The SIP servers are different from each other in that they operate on different platforms and/or support different SIP messaging protocols, the adaptation proxy for message conversion between different VoIP domains. A first VoIP domain of the different VoIP domains relates to a unit comprising a first SIP server of the SIP servers and a first client device of the client devices, and a second VoIP domain of the different VoIP domains relates to a unit comprising a second SIP server of the SIP servers and a second client device of the client devices. The adaptation proxy may comprise:
an SIP adaptor operable to transform and to transport SIP messages between the first client device and the second client device served by the first SIP server and the second SIP server, respectively;
a CSTA gateway operable to convert a CSTA event supported by the second SIP server into a format supported by the first SIP server, wherein the CSTA event independently operates over the SIP messages to communicate remote control commands; and
a presence integrator operable to notify a change to a call state of the first client device served by the first SIP server to the second SIP server after having performed a mapping between the changed call state and a corresponding presence state of the second client device served by the second SIP server so as to integrate presence information of the first client device and the second client device; wherein said notification is achieved by receiving a SIP message from the first SIP server comprising the changed call state, to perform said mapping and to send a SIP message to the second SIP server comprising the corresponding presence state; wherein the presence integrator is further operable to perform the mapping between the call state and the presence state by accessing a table comprising an assignment of possible call state values for the call state with corresponding possible presence state values for the presence state in order to associate the call state with the corresponding presence state.

The adaptation proxy may support interaction comprising data exchange, communication, remote call control, presence information integration, and/or message conversion between different VoIP (voice over Internet Protocol) domains based on different SIP message formats in the SIP (Session Initiation Protocol) control layer. A VoIP domain may relate to a unit comprising at least one SIP server (such as a standard VoIP server, a presence server, etc.) and at least one client or client device (e.g. a hard-phone such as an IP phone, a soft-phone such as instant messaging client) which is served by said corresponding SIP server.

The SIP adaptor may allow call sessions management between the VoIP domains. For example, the SIP adaptor may transform an SIP message sent from one SIP server to another SIP server which is different from the first one. An SIP server may be different from another SIP server in that it operates on another platform and/or supports another SIP messaging protocol. Furthermore, the SIP adaptor may close an SIP signaling coming from a first VoIP domain and open a new signaling to a second VoIP domain (and way back), adapting the SIP signaling messages and therefore allowing communication between said two realms (i.e. VoIP domains).

The CSTA (Computer Supported Telephony Application) gateway may enable remote call control services between different client devices in addition to call session management. For example, a first client device which is different from a second client device such that the two client devices are served by different SIP servers are remotely associated to each other (e.g. the two client devices may be operated by the same user). In one example, the first client device may be a hard-phone such as an IP phone which is served by a standard VoIP server and the second client device may be a soft-phone such as an instant messaging client (e.g. a Microsoft Office Communicator (MOC)).

Accordingly, it might be the case that only one of the client devices is operable to perform remote call control and/or call control might be performed differently by the two devices, although it might be advantageous for a user of the two client devices to be aware of a both client devices such that he can more easily handle, survey, and/or control his client devices. Therefore, one of the client devices (e.g. the second client device) may provide remote call control, e.g. by displaying a call control state of a client device belonging to the user through a GUI and by sending an event to remotely control a call to the other client device (e.g. the first client device). In order to understand and process the event at the first client device, the CSTA gateway may transform the event into a format which is readable and processible by the first SIP server serving the first client device. Said transformation may be performed by accessing a list and/or a table comprising an assignment of possible events to corresponding possible actions of the format. Such an event may be for example, "make call", "answer", and/or "clear connection". The transformed event is then forwarded to the first client device which performs a corresponding result. The result may be then sent to the CSTA gateway which may perform the required transformations and may forwards the action transformed into an event to the second client device which then may display the respective event for the first device to the user.

The presence integrator may support presence information integration between the different client devices served by the different SIP servers. In this way, a user may easily survey, control, and/or handle remotely associated client devices even if the client devices are heterogeneous and operated on different server platforms (e.g. SIP servers). For example, a user may have at least a first client device and a second client device which may be remotely associated (and/or connected). Each of the client devices may be associated with different values for a state of the user (e.g. "free for chat", "busy", "away", "do not disturb", "out to lunch"). Such a state may be provided in many different variations by the two client devices. In other words, a state of the first client device may be specified different (e.g. by different possible state values or types) from a state of the second client device although semantically meaning (substantially) the same. The first client device may be a hard-phone (e.g. an IP phone) which may be associated with different possible values of a call state. The second client device may be a soft-phone such as an instant messaging client (e.g. a MOC client) which may be associated with different possible values of a presence state. Furthermore, the second client may be able to display presence information of the user with regard to his associated client devices through a GUI. In order to integrate a call state of the first client with a presence state of the second client such that the presence information of the user can be, possibly at real-time, updated, displayed, and/or communicated to other users, a mapping between said states need to be performed. Such a mapping may be supported by the presence integrator.

For example, the presence integrator may monitor a call state of the first client device by receiving a notification from the first SIP server whenever a change to the call state of the first client device appears. After having received a change to a call state, the presence integrator may map the new call state to a corresponding presence state. For this purpose, the presence integrator may use a list and/or a table comprising an assignment between possible call states (or call state values) and corresponding possible presence states (or present state values). Said list and/or table may be accessed and/or requested from the second SIP server. Having mapped the new call state to a corresponding presence state, the presence integrator may forward through the second SIP server the presence state to the second client device. The second client device may then integrate the presence state with state data of the user to obtain updated presence information and/or display the presence information through its GUI to the user. Furthermore, the second client device may notify the new presence information to one or more client devices of other users listed in a buddy list of the second client device.

Hence, the adaptation proxy may support an easy and slim implemention of new requirements for integration of different VoIP domains through configuration changes for presence information handling and/or through introduction of new software logics for call handling.

Additionally, the adaptation proxy may enable secure communication between the different VoIP domains. For example, the adaptation proxy may support DIGEST authentication. Furthermore, the adaptation server may allow to protect specific SIP message parts and detect anomalous or not expected communication traffic and/or messaging.

Due to the SIP adaptor, the CSTA gateway, and/or the presence integrator, the adaptation proxy may ensure interoperability for any existing and/or foreseen SIP protocol, IP-PBX, presence servers, instant messaging clients, and/or hard-phones such as IP Phones (e.g. Microsoft, Cisco, Avaya, Asterisk). Hence, IP-based communication over the Internet may be eased. Furthermore, Internet telephony becomes more integrated such that a user may not be aware of a specific hardware and/or software standard to run his IP telephony clients. Additionally, the adaptation proxy may be easily extended e.g. by introducing new types of services based on the integration with every existing and/or foreseen IMS Standard component such as an Application Server.

According to another aspect, the CSTA event may be sent from the second client device to control calls at the remotely associated first client device.

According to yet another aspect, the presence integrator may be further operable to:
perform the mapping between the call state and the presence state by accessing a table comprising an assignment of possible call state values for the call state with corresponding possible presence state values for the presence state in order to associate the call state with the corresponding presence state.

According to yet another aspect, the first client device and the second client device may be remotely associated and assigned to a user in a buddy list associated with the second client device served by the second SIP server.

According to yet another aspect, the second SIP server may be operable to:
integrate the change to the call state, which is mapped to the corresponding presence state by the presence integrator, with state data of the second client device and to notify said change to at least one further user in the buddy list.

According to yet another aspect, the buddy list may be displayed to the user through a GUI of the second client device.

According to yet another aspect, the first SIP server may be a standard VoIP server and the first client device may be a corresponding hard-phone served by the VoIP server; and the second SIP server may be a presence server and the second client device may be a corresponding instant messaging client.

According to another general aspect, a computer system according to claim 7 for enabling presence and remote call control services between client devices served by different SIP servers is provided. The computer system may comprise:
an adaptation proxy according to any one of claims 1 to 6;
a first SIP server which can be connected to the adaptation proxy;
a second SIP server which can be connected to the adaptation proxy, wherein the first SIP server and the second SIP server operate on heterogeneous platforms and over heterogeneous messaging formats; and
a plurality of client devices, wherein at least a first of the client devices is served by the first SIP server and wherein at least a second of the client devices is served by the second SIP server.

According to yet another general aspect, a computer-implemented method in an adaptation proxy for enabling presence and remote call control services between client devices served by different SIP servers is provided, the computer-implemented method having the features of claim 8.

In another general aspect there is provided a computer-program product comprising computer readable instructions, which when loaded and run in a computer system and/or computer network system, cause the computer system and/or the computer network system to perform a method of any of claims 8-12.

The subject matter described in this specification can be implemented as a method or as a system or using computer program products, tangibly embodied in information carriers, such as a CD-ROM, a DVD-ROM, a semiconductor memory, signal and/or data stream, and a hard disk. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various MRI machines.

Details of one or more implementations are set forth in the accompanying exemplary drawings and exemplary description below. Other features will be apparent from the description and drawings, and from the claims.

### Brief Description of the Drawings

Figures 1A and 1B show a block diagram and a corresponding flow diagram of an exemplary adaptation proxy.
Figure 2 shows a block diagram of an exemplary adaptation proxy according to its functionality.
Figure 3 shows a block diagram of a general network scenario integrating different VoIP domains through an adaptation server.
Figure 4 shows a block diagram of an exemplary reference network scenario comprising an adaptation server.
Figures 5A to 5I show block diagrams of an exemplary presence integration use case in an integrated VoIP network including an adaptation proxy.
Figures 6A to 6E show block diagrams of an exemplary remote call control use case in an integrated VoIP network including an adaptation proxy.
Figure 7 shows a block diagram of an exemplary computer system and/or network.

### Technical Terms

The following technical terms are widely used throughout the description. The terms may refer to but are not limited to the subsequently given explanations.

The *SIP (Session Initiation Protocol)* may relate to a text-based signaling protocol, widely used for setting up and/or tearing down multimedia communication sessions such as voice and/or video calls over Internet Protocol (IP). Other feasible application examples may, for example, comprise video conferencing, streaming multimedia distribution, instant messaging, presence information, and/or online games. The protocol may be used for creating, modifying, and/or terminating two-party (i.e. uni-cast) and/or multiparty (i.e. multi-cast) sessions comprising one or more media streams. The SIP protocol may be a TCP/IP-based application layer protocol. SIP may be independent of an underlying transport layer such that it may run on different transport protocols such as TCP (Transmission Control Protocol), UDP (User Datagram Protocol), and/or SCTP (Stream Control Transmission Protocol).

An *IP PBX (Private Branch Exchange)* or IP PBX server may relate to a telephone system designed to deliver voice and/or video over a data network and may interoperate with a normal Public Switched Telephone Network (PSTN). VoIP (Voice over Internet Protocol) gateways may be combined with traditional PBX functionality. An IP PBX server may be realized as a hardware object, or virtually, as a software system.

*Microsoft Office Communications Server (MS OCS)* may relate to an enterprise real-time communications server, providing infrastructure for enterprise instant messaging, file transfer, peer-to-peer and/or multi-part voice and/or video calling, ad hoc and/or structured conferences (audio, video, and/or web), and/or PSTN connectivity. The MS OCS may act as a presence server. A *presence server* may relate to a software platform that may gather presence information from a plurality of different providers, other servers, and/or clients and then may share the presence information between those providers, clients, and/or other applications that are interested in it. Said functionalities may be performed by the presence server in real-time. Another example of a presence server is Avaya's Presence Server.

In computer and/or telecommunication networks, *presence information* may relate to a state indicator that conveys ability and/or willingness of a potential communication partner (e.g. a user client and/or a client device) to communicate. A client device may provide presence information (e.g. a presence state and/or a call state) via a network connection to a presence service (e.g. at a presence server), which may be stored in what constitutes the client's personal availability for distribution to other clients and/or users to convey his availability for communication. For example, a user client or client device may publish a presence state to indicate its current communication state. Said published state may inform other users and/or their clients or client devices that wish to contact the user of his availability and/or willingness to communicate. Presence information may be communicated to other users in a network by displaying an indicator icon on an instant messaging client (e.g. Microsoft Office Communicator (MOC)) typically from a choice of graphical symbols with an easy-to-convey meaning, and/or a list of corresponding text descriptions of each state. Common states on a user's availability may comprise "free for chat", "busy", "away", "do not disturb", "out to lunch", etc. Such states may be provided in many variations across different instant messaging clients. Some instant messaging clients may additionally support presence attributes that may be used for presence information such as user mood, location, and/or free text state.

*Remote call control* may be a means to enable an instant messaging client (e.g. MOC) to control a remote associated client such as an IP phone and/or a PBX phone.

A *buddy list* may relate to a pop-up window of a GUI that may display one or more buddies such as related entities (e.g. client devices) of a user and/or clients related to each user may be seen on to said buddy list. When another client and/or user signs on the buddy list, a communication session may be established between signed users through their listed client devices.

*Computer-supported telecommunications applications (CSTA)* may relate to an abstraction layer for telecommunication applications. CSTA may be independent of underlying communication and/or transport protocols. CSTA may comprise a telephone device model that may enable CTI applications to work with a wide range of telephone devices. CSTA may relate to a normalized call control model. For example, a basic telephony profile may provide features such as "make call", "answer", and/or "clear connection". Protocols that may be used by CSTA may include for example SIP, H323, and/or ACSE/ROSE. Such protocols may be referred to as CSTA protocols. A CSTA event may relate to an CSTA (control) message, i.e. a message sent using CSTA.

The *Java Telephony API (JTAPI)* may support telephony call control. The JTAPI may relate to an extensible application programming interface (API) designed to scale for use in a range of domains, e.g. from first-party call control in a user device to third party call control in a large distributed call center.

### Detailed Description

In the following, a detailed description of examples will be given with reference to the drawings. It should be understood that various modifications to the examples may be made. In particular, elements of one example may be combined and used in other examples to form new examples.

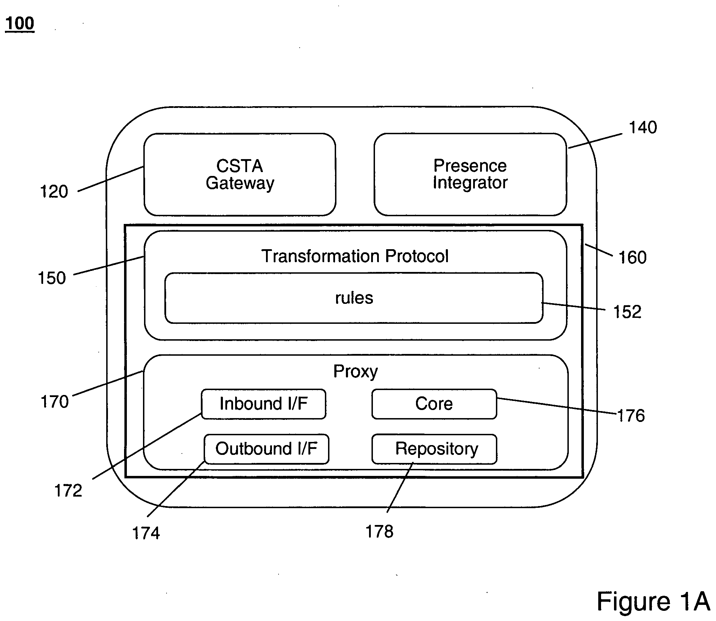

**Figure 1A** shows an exemplary implementation of an adaptation proxy 100. The adaptation proxy 100 may comprise a CSTA gateway 120, a presence integrator 140, and/or a SIP adaptor 160. The SIP adaptor 160 may comprise a transformation protocol 150 and a proxy 170. The transformation protocol 150 may comprise rules 152, such as transformation and message format rules. The proxy 170 may comprise an inbound interface 172, an outbound interface 174, a core component 176, and/or a repository 178.

The CSTA gateway 120 and the presence integrator 140 of the adaptation proxy 100 may support presence and/or remote call control services between different client devices served by different SIP servers. The SIP servers may operate on different platforms and/or may be based on different signaling and/or messaging formats. The two components 120, 140 may be implemented in the adaptation proxy 100 in addition to the SIP adaptor 160. Hence, the components 120, 140 may enable the above addressed services (i.e. presence and/or remote call control services) and call session management may be enabled by the SIP adaptor 160.

The CSTA gateway 120 supports remote call control services between different client devices which are served by different SIP servers. For example, one client device, an IP phone, client may be served by an IP PBX server while another client device (e.g. an MOC client) may be served by a Microsoft OC server. These different clients and their corresponding servers may support different and/or no formats for remote call control. In other words, different SIP servers may use different implementations of the CSTA protocol and/or may not support the CSTA interface but rather another telephony API to manage remote call control functionalities between different client devices. Therefore, an integration between the different formats for remote call control in case a user may have different kinds of client devices (e.g. a soft-phone such as an MOC client, and a hard-phone such as an IP phone) may become necessary. Accordingly, in the above example, the CSTA gateway 120 may be responsible for translation of CSTA events of the Microsoft OC server (received from the MOC client) into third party PBX API actions such as Java telephony API actions (sent to the IP phone through the IP PBX server).

To allow remote call control services between different client devices operating on different server platforms or servers and to enable integration between the different client devices, the CSTA gateway 120 of the adaptation proxy 100 converts CSTA control messages (e.g. CSTA events over standard SIP protocol) supported by one SIP server (e.g. a Microsoft OC server) in the format (e.g. used by a specific third party PBX API, such as Java telephony API) supported by another SIP server (e.g. an IP PBX server) and vice-versa. In one exemplary implementation of the conversion between different control messages and corresponding control results the CSTA gateway may be integrated with or may have access to a mapping and/or association which associates (e.g. in a table) the different control commands according to their corresponding semantics.

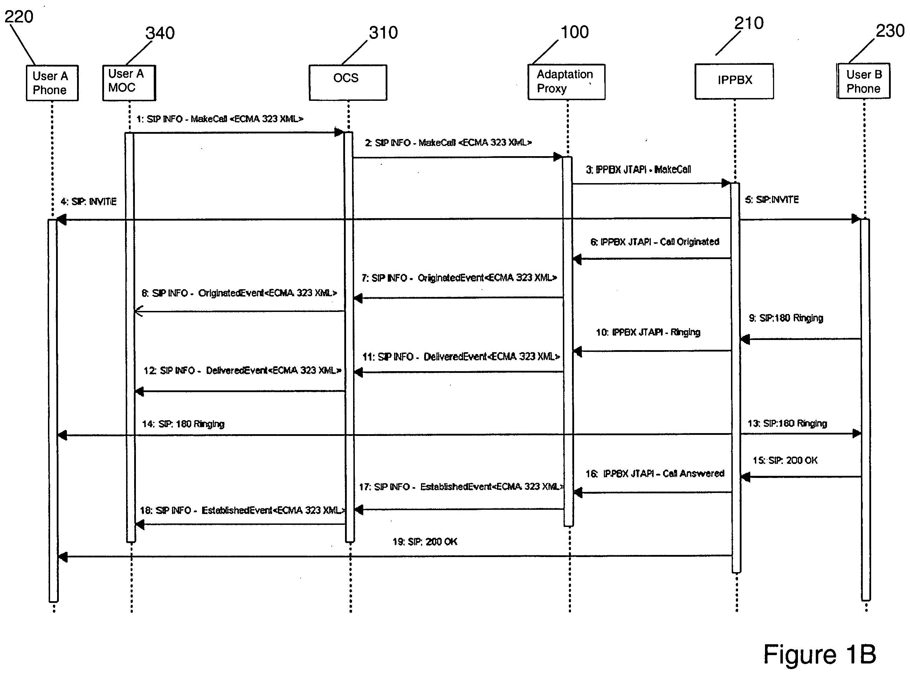

Figure 1B shows an exemplary flow diagram of said mapping, i.e. a basic remote call control flow. A user A may have a first client device 220 and a second client device 340 and may make a call to a number by typing in the number in a search box of an office communicator (e.g. Microsoft Office Communicator) or by selecting the phone number of a contact from a click-to-call list. When the user A selects to call a number, the office communicator issues a "MakeCall" command to the second Sip server 310 (e.g. from the first client device 220) and then to the CSTA gateway 120 of the adaptation proxy 100.

The CSTA gateway 120 translates the MakeCall command into a proprietary message supported by a first SIP server 210. the first client device 210 goes off-hook and places a call to the selected phone number.

In this context it should be noted that the interface to the CSTA gateway 120 provides elaborate mechanisms to indicate various states of the first client device 220. In the example of Fig. 1B, there are multiple events being received by the office communicator related to the second client device 340 that indicate the activity on the first client device 220. Said events may start with a "OriginatedEvent" (indicating that the first client device 220 is originating in an outgoing call) to a "DeliveredEvent" (indicating a ringing state).

When the call is finally answered, the first SIP server 210 sends the appropriate signals to the CSTA gateway 120 of the adaptation proxy 100 and an "EstablishedEvent" is sent to the office communicator of the second client device 340 indicating that the call has been answered (e.g. through a first client device 230 of a user B).

As described previously, in known systems there may arise difficulty in presence integration between different SIP servers. For example, presence integration functionalities may not be supported by any kind of SIP server and/or SIP servers may be managed in different way, and/or referred to different client devices such as hard-phones (e.g. IP phones) and/or a soft-phone (e.g. MOC clients).

Accordingly, in case that a plurality of different VoIP domains (i.e. different SIP servers, each serving one ore more client devices) should be integrated into a heterogeneous VoIP network, presence information needs to be integrated before any update may be performed by a server acting and/or operating as a presence server (e.g. a Microsoft OC server). Integration of presence information also may become necessary if a user is aware of at least two different client devices such as a hard-phone (e.g. an IP phone) and a soft-phone (e.g. a MOC client) which are heterogeneously served by different SIP servers.

To enable integration of presence information of different (associated and/or connected) client devices and/or interoperability between said client devices, the presence integrator 140 of the adaptation proxy 100 may be used.

Hereinafter, a state of a first SIP server such as an IP PBX server may be referred to as a call state and a state of a second SIP server such as a Microsoft OC server may be referred to as a presence state. Information regarding a call state and/or an presence state and/or further data related to a presence of a client device may be referred to as presence information.

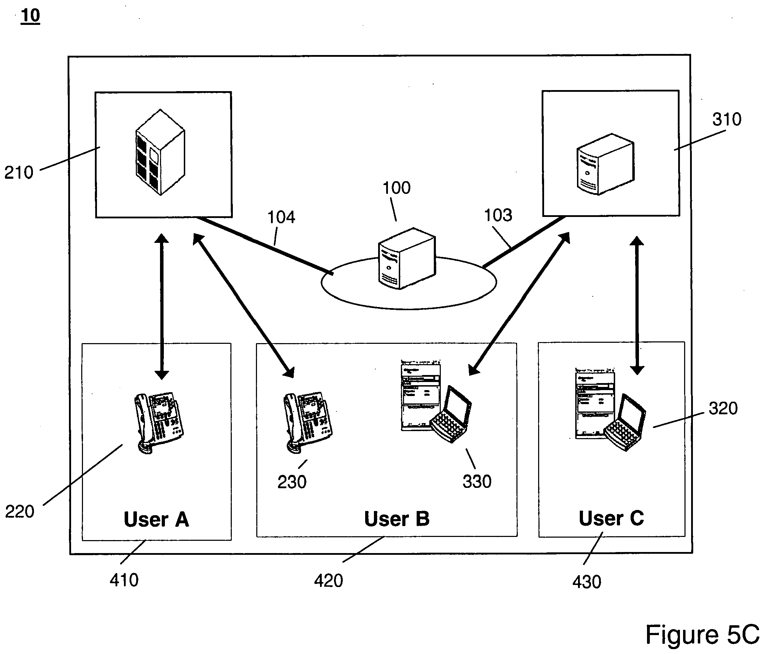

The presence integrator 140 may support one or more of the following functionalities. Assume that a user has at least a first client device served by a first SIP server and at least one second client device served by a second SIP server. In order to integrate the presence information of said two client devices of the user, the following actions may be performed by the presence integrator:
- Monitoring a change to a call state of the first client device.
- Integrating different presence information (including call state and presence state) from the at two different SIP servers by providing an appropriate mapping, e.g. to obtain a final presence state of associated and/or connected client devices to communicate to a second SIP Server for updating purposes. For the integration of the presence information, a corresponding presence state for the second client device may be determined by the presence integrator 140. In one exemplary implementation of the presence integrator 140, the presence integrator 140 may access a mapping comprising an association of each call state belonging to the first client device and a corresponding presence state belonging to the second client device for each client device of the user in a buddy list registered in the adaptation proxy 100 and/or in one any of the client devices of said user. An example of an association between an exemplary call state and a corresponding presence state is given below with reference to Fig. 5C described later.
- Sending a notification of a change of a presence state (and/or a change to a call state) for the second client device to the second SIP server.

For example, after receiving a change to a call state from the first SIP server (e.g. standard SIP based) at the adaptation proxy 100, the presence integrator 140 may perform a mapping between presence information (including the call state) of the first SIP server and presence information (including a presence state) of the second SIP server (e.g. a Microsoft OC server). Subsequently, the presence integrator 140 may send a request for the change of the presence state to the second SIP Server.

The SIP adaptor 160 is a software and/or hardware component of the adaptation proxy 100 for interaction and/or integration of one or more heterogeneous VoIP domains. Clients or client devices served by (e.g. associated with, implemented with and/or belonging to) different SIP servers, which may be implemented on different platforms and which may utilize dissimilar SIP message formats, can be integrated using the SIP adaptor 160.

The SIP adaptor 160 supports and realizes communication session establishment between clients of different SIP servers. Different SIP servers may operate on different platforms, may use dissimilar SIP message formats possibly over different Internet protocols for data transfer (e.g. UDP, TCP, etc.). The SIP adaptor 160 is operable to join and/or to integrate two or more different signaling sessions (e.g. SIP protocol over UDP and SIP protocol over TCP). Furthermore, the SIP adaptor 160 is operable to modify a format of a SIP message received from a first SIP server (including e.g. modifying field content by removing media types from the SIP message that would not be recognized by a second SIP server) and to send the modified SIP message from the first SIP server to a second SIP server.

The transformation protocol 150 of the SIP adaptor 160 may be implemented to modify a SIP message received from a first SIP server so that it conforms to the domain of a second SIP server that is to receive the SIP message. For this purpose, the transformation protocol 150 may include accessing a repository programmed with information about the SIP servers, including transformation and (message) format rules 152. The rules may include matching SIP message parameters to particular formats, properties and/or actions to be taken such as parameter deletion, insertion, modification, and/or other aspects of SIP messages.

The proxy (or proxy server) 170 of the SIP adaptor 160 is operable to modify field content of a SIP message received from the first SIP server so that it is compliant with the messaging format of the second SIP server. The inbound interface 172 of the proxy 170 may communicate with a first SIP server in accordance with a first SIP server messaging format supported by the first SIP server. The outbound interface 174 of the proxy 170 may communicate with a second SIP server (which is different from the first SIP server) in accordance with the second SIP server messaging format supported by the second SIP server. The core component 176 of the proxy 170 may modify SIP messages received from the first SIP server and/or from the second SIP server so that each SIP message conforms to the format of the SIP server that is to receive said SIP message. The repository 178 of the proxy 170 may store information for mapping user and domain names to specific SIP messaging and network formats and for identifying the SIP servers associated with each domain name.

Hence, the proxy 170 and the transformation protocol 150 of the SIP adaptor 160 are responsible for call session management. Call session management may include interacting with the two or more SIP servers (e.g. through their respective domain interfaces), acting as back-to-back user agent, managing, and/or translating SIP signaling messages on said interfaces.

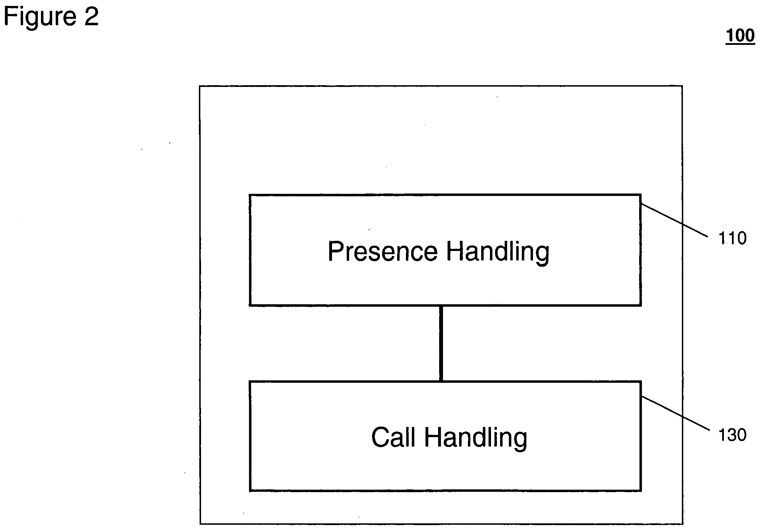

**Figure 2** shows exemplary functionality, in particular presence handling 110 and call handling 130, of the adaptation proxy 100 which may be provided by the CSTA gateway 120, the presence integrator 140, and/or the SIP adaptor 160.

Call handling 130 may be performed by the SIP adaptor 160. For example, the transformation protocol 150 and the proxy 170 may manage and/or handle call session management between different SIP servers serving different client devices (e.g. between a standard VoIP server and Microsoft OCS).

Call handling 130 may provide one or more of the following functionalities:
- A back-to-back user agent (B2BUA), which may be a logical SIP network element and which may reside between both client devices involved in a communication session over the Internet (e.g. a phone call), may divide said communication session into two call legs and may mediate at least some SIP signaling messages between both involved client devices during the session. A communication session may be tracked from its beginning to its end, allowing operators of the B2BUA to offer value-added features to the communication session.
- Calls may be handled between different client devices through different SIP servers, and the client devices may be served by additional functionalities such as URI translation, domain resolution, and/or dynamic routing rules.
- Conversion from SIP over TCP protocol to SIP over UDP protocol and vice-versa may be provided.
- Additional services such as call transfer, call forwarding, and/or call hold may be supported.

Presence handling 110 may be performed by the presence integrator 140 and/or the CSTA gateway 120. The presence integrator 140 and/or the CSTA gateway 120 may manage presence and/or remote call control functionalities between different client devices served by different SIP servers (for example between a standard VoIP server and MS OCS).

Presence handling 110 may provide one or more of the following functionalities:
- Monitoring of changes of a presence state and/or of a call state of client devices served by different SIP servers;
- Integration of presence information between different SIP servers;
- Requests for changes to a presence state of a second client device from a second SIP server and/or for changes to a call state of a first client device from a first SIP Server; and/or
- Conversion of messages related to a presence state and/or a call state and/or call control instructions exchanged between the different SIP servers.

The call handling 130 and the presence handling 110 may be integrated in the adaptation proxy 100 to route user data between different VoIP domains.

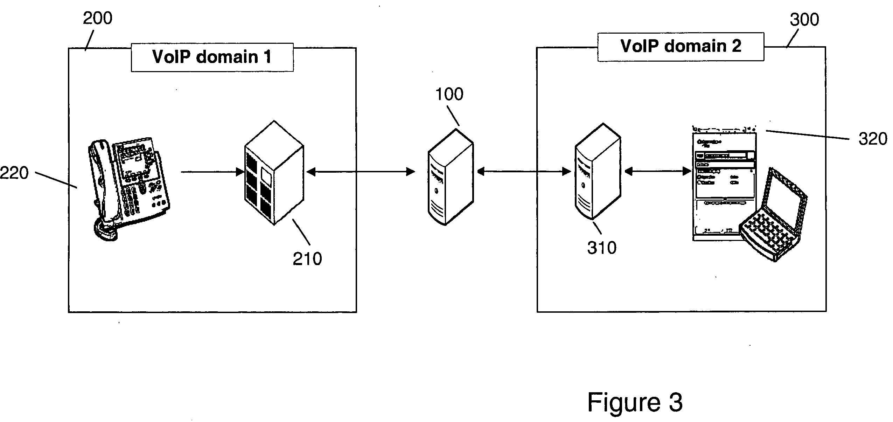

**Figure 3** shows an exemplary realization of a general network scenario for integrating different, heterogeneous VoIP domains 200, 300 through the adaptation proxy 100. A VoIP domain 200, 300 may relate to a unit of at least one SIP server and one or more client devices served by the SIP server.

As shown in Fig. 3, the adaptation proxy 100 may be connected with a first SIP server 210 of a first VoIP domain 200 and with a second SIP server 310 of a second VoIP domain. The first SIP server 210 may serve a first client device 220 and the second SIP server 310 may serve a second client device 320. Hence, the client devices 220, 320 are connected to each other and may exchange data and/or information between each other through there respective SIP servers 210, 310 which can be connected through the adaptation proxy 100.

The adaptation proxy 100 supports interaction and/or integration of the heterogeneous VoIP domains 200, 300, and in particular, between the client devices 220, 320 belonging to (or served by) the different SIP servers 210, 310 operating on different platforms and/or utilizing dissimilar SIP message formats.

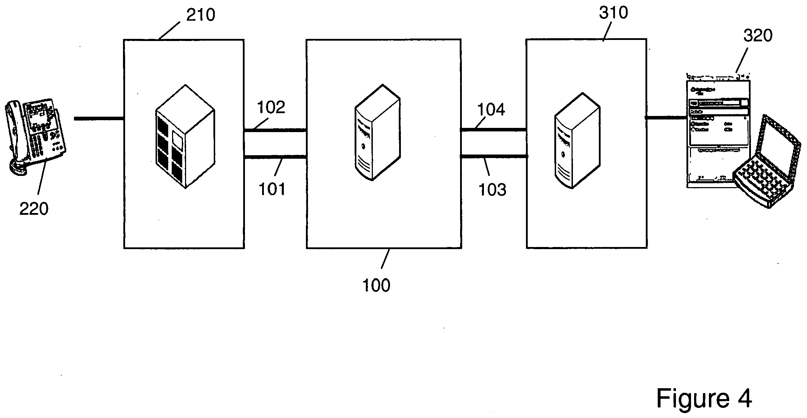

Interactions through the adaptation proxy 100 in an heterogeneous VoIP network (e.g. the network shown in Fig. 3) is described with reference to Figure 4. Fig. 4 shows an exemplary reference network of the adaptation proxy 100 integrating different client devices 220, 320.

According to the exemplary network shown in Fig. 4, the adaptation proxy 100 integrates a first SIP server 210 (e.g. a standard VoIP server such as an IP PBX server which may be from any producer of said servers) and a second SIP server 310 (e.g. a Microsoft OC server). Users may be provided with client devices 220, 320 such as soft-phones (e.g. MOC clients) 320 and/or hard-phones (e.g. IP phones) 220. The client devices 220, 320 may be served by the respective SIP servers 210, 310. As exemplarily shown in Fig. 4, an IP-phone 220 is served by an IP PBX server 210 and a MOC client 320 is served by a Microsoft OCS 310.

In the exemplary network of Fig. 4, presence functionalities may not be implemented by both SIP servers 210, 310. Furthermore, remote call control functionalities may be managed through different protocols in the SIP servers 210, 310.

For example, the network of Fig. 4 may comprise at least one first client device 220 such as hard-phone (e.g. an IP phone) which is served by a first SIP server 210. The first SIP server 210 (e.g. an IP PBX server) may communicate using standard SIP messages over UDP 102. Furthermore, the VoIP network may comprise at least one second client 320 such as a soft-phone (e.g. a Microsoft Office Communicator (MOC)) which is served by a second SIP server 310 (e.g. Microsoft OCS). The second SIP server 310 may communicate using non-standard SIP messages over TCP 104.

A non-standard SIP Protocol may relate to a SIP method which may not compliant with SIP RFC3261. For example, some custom SIP-based systems allow header fields, in the used methods, not compliant with RFC 3261. The adaptation proxy 100 may be able to map a non-compliant SIP method to a method compliant with RFC3261 when a customer system would be integrated with others SIP standard systems like Microsoft OCS or Cisco CallManager.

For remote call control, the first SIP server 210 may use a specific third party PBX API (e.g. Java telephony API) 101 whereas the second SIP server 310 may use CSTA over SIP for remote call control.

Presence information may be handled only by one of the client devices 220, 320 such that the adaptation proxy 100 is necessary to integrate presence information for the client devices 220, 320.

The first client device 220 may not directly interact with the second client device 320, which do not adopt standard SIP protocol such that the adaptation proxy 100 is necessary to adapt the signaling messages, and thus, allowing the dialogue between the client devices 220, 320.

In other words, because the second client device 320 does not adopt standard SIP protocol, the adaptation proxy 100 is necessary for the first client device 220 to directly interact with the second client device 320. Specifically, the adaptation proxy 100 is needed to adapt the signaling messages between the client devices 220 and 320, thereby allowing a dialogue between the devices.

Using the client devices 220, 320 in the exemplary network of integrated SIP servers 210, 310 through the adaptation proxy 100, a user may receive a call (substantially) at the same time on both client devices 220, 320. The user may answer the call from any preferred client device 220, 320. The user may activate remote call control services to control the first client device 220 using a GUI provided with the second client device 320. The user may access presence information (e.g. In Call, In Conference), using the GUI of the second client device 320, for the first client device 210, wherein the two client devices 220, 320 may belong to the user's buddy list.

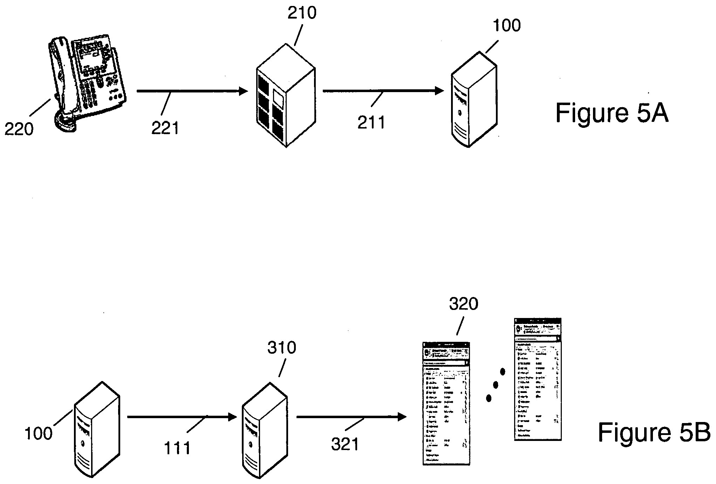

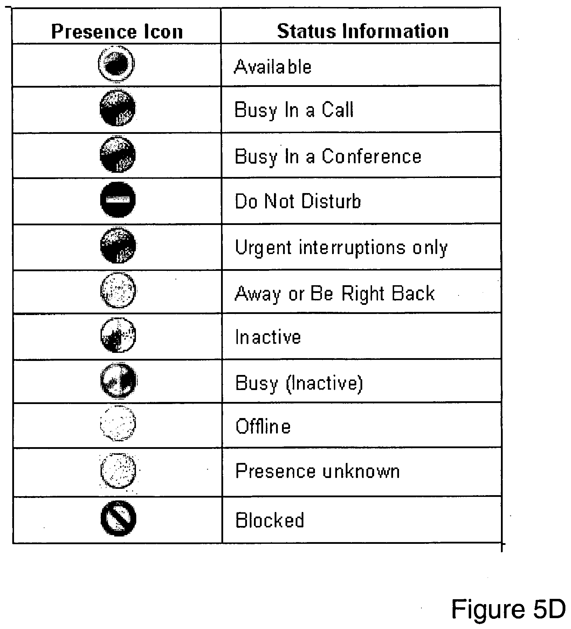

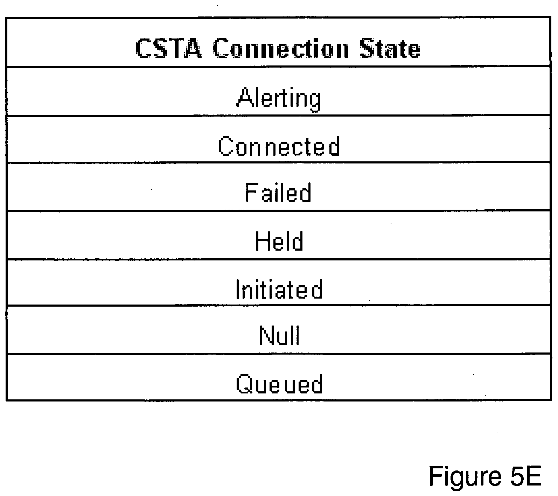

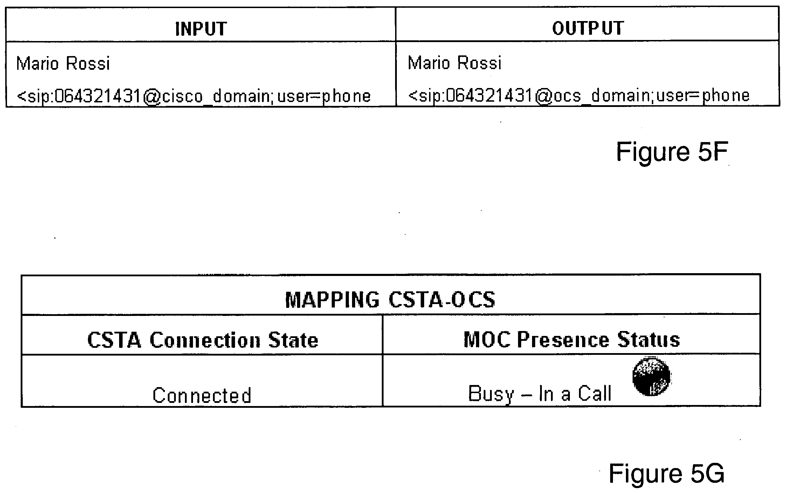

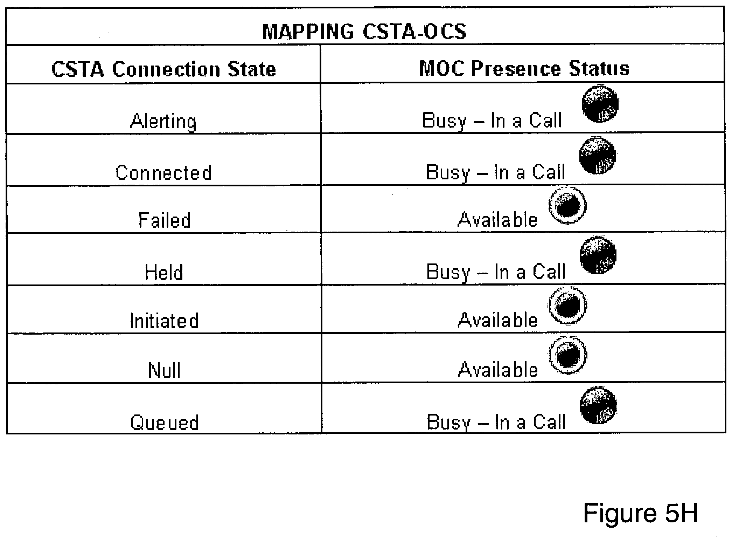

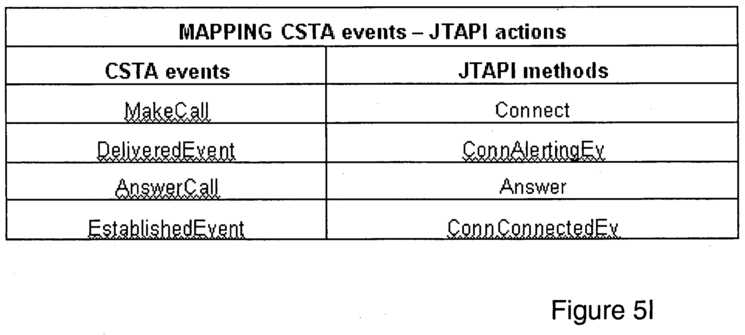

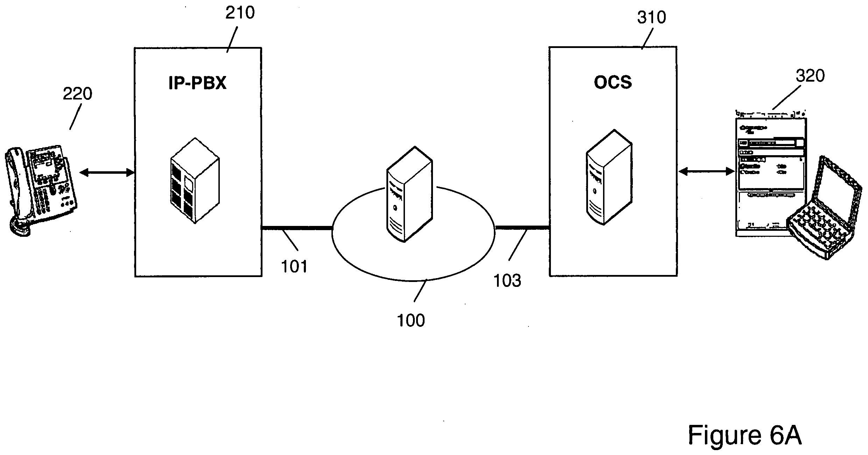

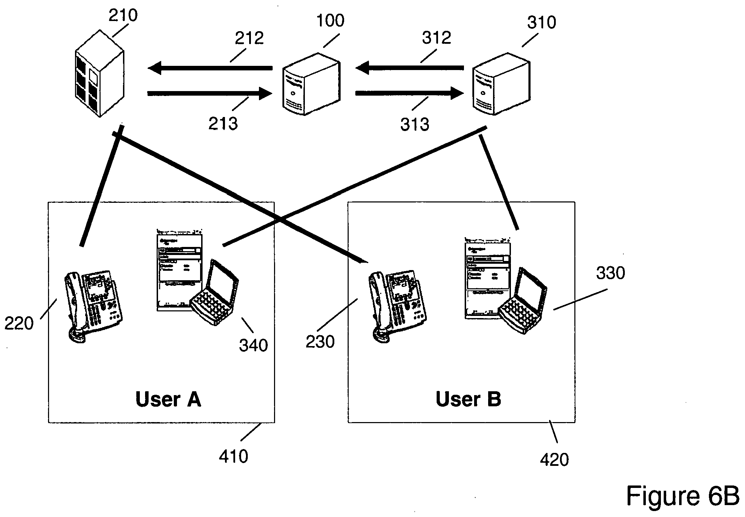

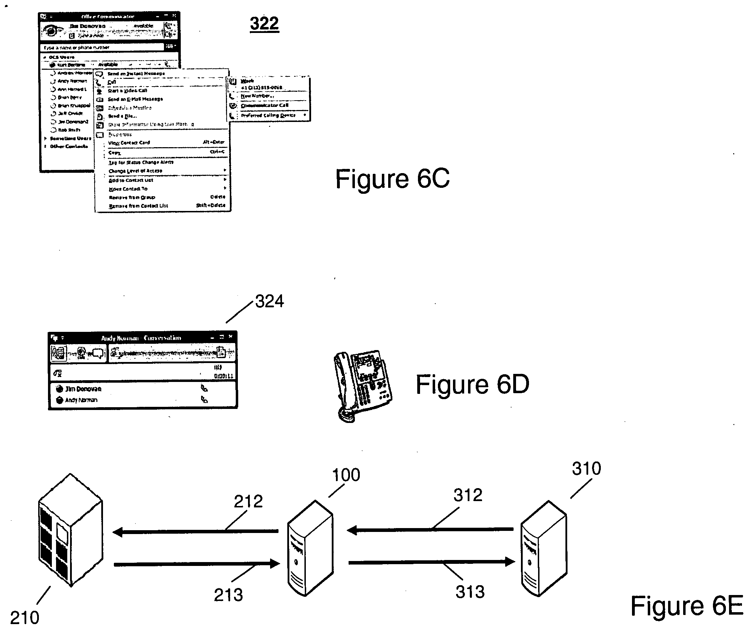

To enable said services, the adaptation proxy 100 provides functionalities such as back-to-back user agent, URI translation, domain resolution, presence, dynamic routing rules. Exemplary implementations of the above described functionalities of the adaptation proxy 100, in particular, integration and/or management of presence information integration and of remote call control will be described below with references to Figs. 5 and 6.

**Figures 5A to 5C** show an exemplary presence integration use case in an heterogeneous VoIP network with an adaptation proxy 100 (e.g. the network shown in Figs. 3 and 4).

In one exemplary implementation, a user may be aware of at least two different client devices, a first client device 220 (e.g. a hard-phone) served by a first SIP server 210 (e.g. a standard VoIP server such as an IP PBX server) and a second client device 310 (e.g. a soft-phone) served by a second SIP server 310 (e.g. a presence server such as Microsoft OCS). The client devices 220, 320 may be listed and/or stored in a buddy list of the user. The buddy list may be held (and/or stored) at the second client device 320 and may be displayed to the user through a GUI on the second client device 320. The second SIP server 310 may provide functionalities for aggregating and/or integrating presence information. The presence information may be related to at least one call state of the first client device 220 and at least one presence state of the second client device 320. In one exemplary implementation, presence information of the first client device 220 may relate to a call state (e.g. connected, ringing, on hook, off hook, etc.) that is different from a presence state (e.g. online, offline, busy, etc.) of the second client device 320. A call state and a corresponding presence state may be associated in a list and/or a table such that the presence integrator 140 may access the list and/or the table to map a call state to at least one corresponding presence state and vice-versa. A state for a user, which may be unique, may be displayed in the buddy list associated with the user in the GUI of the second client device 320. Supported state types are related to a call state of the first client device 220 and/or the second client device 320 and may comprise one, more, or all the state types of Instant Messaging and possibly other state types such as "In a Call", and/or "In a Conference", which may be typical for the first client device 220, wherein instant messaging may relate to a client-server real-time communication system used by a client device connected over a network such as the Internet.

When integrating the presence information of the client devices 220, 320 at the presence integrator 140 of the adaptation proxy 100, the presence information may be related to a state configured for the second client device 320 with information on a current state of the first client device 220. Said mechanism may be based on the ability of the second SIP server 310 to allow different client devices (e.g. MOC and PBX phones) to be associated to the same user and/or SIP URI (e.g. an URI comprising a SIP protocol attachment), wherein the client devices 220, 320 may be differentiated based on their SIP address such as a global routable user URI.

In one exemplary implementation, a user may have a first client 220 (e.g. a hard-phone such as an IP phone) and a second client 320 (e.g. a soft-phone such as a MOC client). Consequently, presence information (comprising a call state of the first client device 220 and a presence state of the second client device 320) may not be exchanged directly. Rather integration become necessary. Said integration may be performed by the presence integrator of the adaptation proxy 100 in the network shown in Figs. 3 and 4.

As shown in **Figure 5A**, the adaptation proxy 100 monitors a call state of the first client device 220 of a user who also has a second client device 320. A unique state for both the client devices 220, 320, may be displayed on a GUI of the second client device 320 and on a GUI of the client device 320 of one, more, or all of the second client devices of a buddy list for users. If a change to the call state appears, the change to the call state is received at the first SIP server 210 which servers the first client device 220. In other words, the first SIP server 210 monitors at least one call state of the first client device 220, at step 221. If a change to the call state of the first client device 220 occurs, the first SIP server 210 communicates and/or notifies, e.g. through standard SIP signaling, this change to the adaptation proxy 100, at step 211.

After having received the change to the call state of the first client device 220 from the first SIP server 210, the adaptation proxy 100 associates the change of the call state of the first client device 220 to the second client device 320 of the user. Then, the adaptation proxy 100 associates a new call state (resulting from the change to the initial call state) to a corresponding presence state of the second client device 320. For this purpose, an appropriate state mapping may be implemented. For example, the state mapping may comprise a table associating e.g. a call state "connected" to a presence state "busy - in a call".

As shown in **Figure 5B**, after having performed the mapping between the new call state and the corresponding presence state, the adaptation proxy 100 notifies the new presence state to the second SIP server 310 through a respective SIP signaling, 111. The adaptation proxy 100 notifies the new presence state to the second SIP server 310 through a respective SIP signaling, requesting the change of the presence state of the second client device 320. Then, the second SIP server 310, updates the presence state of the second client device 320, at step 321 and notifies the change of the presence state (i.e. the new presence state) to all users of the second client device 320 buddy list (e.g. the new presence state is distributed to the client devices of the other users listed in the buddy list).

In other words, if a user has a first client device 220, and a second client device 320, the presence integrator 140 of the adaptation proxy 100 constantly monitors a call state of the first client device 220 and, for at least one or every change of the call state, maps the new call state with a corresponding presence state and requests to the second SIP server 310, the update of the presence state of the user.

With reference to **Figure 5C**, a use case scenario of presence integration using an adaptation proxy 100 as shown with reference to Figs. 1 to 4 is shown.

A user A 410 calls a user B 420 using a first client device 220. User B 420 answers the call over his first client device 230. User B 420 also has a second client device 330 which belongs to a buddy list of a second client device 320 of a user C 430. (Substantially) at the same time, user B 420 receives said call on the first client device 230 of user B and on the second client device 330 of user B. User B 420 may decide to answer the call from the first client device 230. Since user B 420 also has a second client device 330, presence information regarding the first client device 230 and the corresponding second client device 330 needs to be updated in the buddy list of user C 430. Therefore, user B 420 and/or the first client device 230 of user B 430 may communicate the change of the call state to the first SIP server 210 serving the first client device 230. The first SIP server 210 notifies said change to the call state of the first client device 230 to the adaptation proxy 100. After having performed presence integration by applying an appropriate mapping between a call state and a corresponding presence state (e.g. IP phone - MOC association, call state - presence state mapping), the adaptation proxy 100 sends a service request for a presence state change to the second SIP sever 310, at 104. The second SIP server 310 updates the corresponding presence state of the second client device 330 and notifies the event to the users in the buddy list (such that each buddy in the buddy list is notified). Then, the second client device 320 of user C 430 may display a "red" indicator for user B 420 in the buddy list (e.g. displayed on the second client device 320), meaning that the current presence state for the user B 420 is "in a call". At 103, the presence state is forwarded to the adaptation proxy 100 through the second SIP server 310.

For example with reference to Fig. 5C, an integrated network domain having different devices, belonging to different VoIP domains and based on different protocols, can be associated with the same user. The following scenario may be implemented in such an integrated network:
- A user, such as user B 420 may have only a second client device 320, e.g. on his personal computer.
- A user may have both a second client device 330 and a first client device 230.
- A user, such as user A 410, may have only a first client device 220, e.g. an IP phone.
- The second client devices 320, 330 may be managed, for example by a second SIP server 310, such as a Microsoft OCS.
- The first client device 220, 230 may be managed by a first SIP server 210 (e.g. Avaya or Cisco Call Manager).
- The second SIP server 310 may manage presence services for at least one or all second client devices 320, 330 that the second SIP server 310 is integrated with.
- If a user, such as user B 420, has both a first client device 220, 230 and a second client device 320, 330, his presence status may refer also to the first client device 220, 230 call operations. For example, if the user answers a call from his first client device 220, his presence status becomes "busy" (which may indicate his call state). Such call operations information may become particularly relevant in managing presence information. For example, if the first SIP server 210 relates to a Avaya or a Cisco Call Manager, they may manage presence information but only in relation to call states. Furthermore, such a first SIP server 210 may not have presence functionality (which may be however provided by the second SIP server 310). Therefore, the second SIP server 310 may and should manage presence status for both the first client device 220, 230 and the second client device, such as a first client device 220 of user A 410 and/or a first client device 230 of user B 420.
- A first client device 220, 230 may not directly interact with the second SIP server 310 to communicate its status because said two realms may use different implementation of an SIP protocol and different information to manage presence services. Accordingly, the adaptation proxy 100 may be necessary to adapt signaling messages between the different realms, integrate presence information, and hence, allow a dialogue between the two realms.

**Figures 5D to 5I** show exemplary presence status reports for the example described in reference to Fig. C. In particular, presence information for both VoIP domains (e.g. the first SIP server 210 and associated first client devices 220, 230 may relate to a first VoIP domain, and the second SIP server 310 and associated second client devices 320, 330 may relate to a second VoIP domain).

**Figure 5D** shows an exemplary presence status report indicating how status information of a user may be visualized on a second client device (e.g. second client devices 320, 330) and the type of status information that may be provided regarding the user. For example, difference presence icons may be used to indicate the presence information as described in Fig. 5D.

**Figure 5E** shows an exemplary CSTA connection state report, representing the status of a first device (e.g. the first client device 220, 230) that is managed by the first SIP server 210. For example, the CSTA states listed in Fig. 5E may be used.

With reference to Fig. 5C, the following exemplary use case may be considered to explain the depicted presence integration scenario.
- A user A 410 calls a user B 420 using a first client device 220, where the user B 420 belongs to a buddy list of a second client device 320 of a user C 430.
- The user B 420 receives the call at the same time on his first client device 230 and on his second client device 330. The user B 420 answers the call from user A 410 on the first client device 230 of user B 420.
- The presence status of the user B 420 needs to be changed and the buddy list of user C 430 needs to be notified of the presence status change of the user B 420.

In this scenario, the adaptation proxy monitors the presence status changes of the client devices of the VoIP domains.

For example, when the user B answers the call using his first client device 230, a SIP message (over UDP protocol) with the CSTA connection state "Connected", is sent from the first SIP server 210 to the adaptation proxy 100.

The adaptation proxy 100 may then perform one or more of the actions next described.

The adaptation proxy 100 may associate the change notification of the first client device 230 to the respective second client device 330 of the user B 420 and retrieves a corresponding number of the second client device 330. This operation may be possible because of a users table of the adaptation proxy 100 that may comprise numbers of both the first client device 230 and the second client device 330 of the user. An example is shown in **Figure 5F**. Fig. 5F shows an example input and output for a user B referring to the domain and client device used.

The adaptation proxy may further perform the mapping between the CSTA Connection state and the presence status of the second client device 330 to communicate the new state to the second SIP server 310 for a corresponding update. An example is shown in **Figure 5G**.

The adaptation proxy may further notify the new presence status, through a SIP signaling message over TCP protocol (e.g. Service Request with the new presence status "Connected"), to the second SIP server 310 to request the presence status change. The second SIP server may then update the presence status of the user of the second client device 330 and notify the event to the second client device 320 of user C 430 and any other client device having an association with the second client device 330 of user B 420 in a buddy list. Then, user C's second client device 320 displays a "red" indicator for user B, meaning that the current presence status for the user B 420 is "Busy - In a call". In this way, the second SIP server 310, may be able to manage the presence status of the first client device 230 associated to a user with both the first client device 230 and the second client device 330.

**Figure 5H** provides some examples of the managed call status and presence status association with the scenario shown in Fig. 5C. For example, a mapping between a CSTA connection state and a corresponding Microsoft office communicator (MOC) is shown (e.g. alerting is a CSTA connection state which corresponds to the MOC presence state Busy-in all call).

**Figure 5I** provides some examples of the managed CSTA events and JTAPI methods association with the scenario shown in Fig. 5C. For example, a mapping between corresponding CSTA events and JTAPI methods are show (e.g. the CSTA event MakeCall may corresponde to the JTAPI method Connect).

**Figures 6A to 6F** show an exemplary remote call control use case in an heterogeneous VoIP network with an adaptation proxy.

A second SIP server 310 may provide remote call control functionalities in order to control a first client device 220 of a user from a GUI of a second client device 320 of the user being served by the second SIP server 310. The remote call control may comprise start a call, answer a call, put a call on hold, redirect a call, and/or add a user to an ongoing call, etc.

In one exemplary implementation, as shown in **Figure 6A**, the second SIP server 310 may use the CSTA protocol over standard SIP (i.e. a CSTA event) 103 to send remote control commands. The first SIP server 210 may support a third party PBX API 101 such as the Java telephony API (JTAPI) format but not a CSTA interface. Consequently, to handle and execute remote call control between the first SIP server 210 and the second SIP server 310, integration become necessary. Said integration may be realized through the CSTA gateway 120 of the adaptation proxy 100 that converts an CSTA (control) message (referred to hereinafter as a CSTA event) into a format (e.g. a specific third party PBX API such as Java Telephony API) supported by the first SIP server 210 and vice-versa to enable remote call control services between a second client device 320 served by the second SIP server 310 and a first client device 220 served by the first SIP server 210.

Accordingly, the adaptation proxy 100 receives and translates CSTA events 103 through the CSTA gateway 120. The CSTA events 103 are sent by the second client device 320 through the second SIP server 310 serving said device 320 in order to remotely control its at least one associated first client device 220 and/or to establish a CSTA session. To be able to control the first client device 220, the CSTA event 103 needs to be translated into a format readable and processible by the first client device 220.

In one exemplary implementation, the first client device 220 may control remote calls through the Java Telephone API (JTAPI) supported by the first SIP server 210.

Accordingly, in this example, the CSTA gateway 120 translates CSTA events 103 into corresponding JTAPI actions 101. For said mapping, the CSTA gateway 120 may have access to a database and/or a repository storing an assignment of each CSTA event to a corresponding JTAPI action. Exemplary events and actions are shown above with reference to Fig. 5I.

After having translated the CSTA event 103 into a corresponding JTAPI action 101 (e.g. using the mapping shown in Fig. 5I), the adaptation proxy 100, receives and translates a corresponding JTAPI action result 101 from the first client device 220 through the first SIP server 210 into one or more corresponding CSTA events 103 and sends said CSTA events 103 through the second SIP server 310 to the second client device 310.

With reference to **Figure 6B**, an exemplary scenario for remote call control is shown. A user A 410 and a user B 420 may both be aware of at least one first client device, e.g. 220 and 230, respectively, and of at least one second client device 340 and 330, respectively. In other words, user A 410 and user B 420 may both use either a soft-phone such as an MOC client (modeled by the second client device 330, 340) and/or a hard-phone such as an IP phone (modeled by the first client device 220, 230) which are interconnected. The first client devices 220, 230 may be served by a first SIP server 210 (e.g. a standard VoIP server such as an IP PBX server) and the second client devices 330, 340 may be served by a second SIP server 310 (e.g. a presence server, e.g. Microsoft OCS may provide functionally of a presence server).

According to the example use case scenario shown in Fig. 6B, a remote call control by at least one of the second clients 330, 340 to command at least one of the first clients 220, 230 to answer a call, is reported.

User A 410 may start a call from his second client device 340 to user B 420. The second client device 340 may provide a GUI 322 as shown in **Figure 6C** to manage a buddy list including at least user A 410, to manage and control remote calls, and/or to manage presence information relating to at least user A 410.

The first client device 230 of user B 420 may alert regarding the call and (substantially) at the same time a pop-up window 324 on a GUI on the associated second client device 330 of user B 420 appears as shown in **Figure 6D**. User B 420 may accept the call, for example, using the second client device 330 and he may also remotely control his associated first client device 230 of user B to answer the call.

To control the associated first client device 230, as shown in **Figure 6E**, a remote control command in terms of a CSTA event 312 is sent by the second client device 330 of user B 420 to the second SIP server 310. The second SIP server 310 forwards the CSTA event 312 to the adaptation proxy 100. The adaptation proxy 100 receives and translates the CSTA event 312 into a corresponding API action 212 (e.g. a specific third party PBX API event such a JTAPI action) which is supported by the first SIP server 210. The adaptation proxy 100 sends the translated API action 212 to the first SIP server 310 which forwards the API action 212 to the corresponding first client device 230 identified in the buddy list of user B 420.

After the first client device 230 has received the API action 212, the first client device 230 sends an API result 213 to the first SIP server 210 which forwards the API result 213 to the adaptation proxy 100. The adaptation proxy 100 receives and translates the API result 213 into a corresponding CSTA event 313. Then, the adaptation proxy 100 sends (over a standard SIP message) the transformed result in the resulting CSTA event 313 to the second SIP server 310 which forwards said CSTA event 313 to the respective second client device 330 of the user B 420.

In this way, a second client device 320, 330 can remotely control its associated at least one first client device 220, 230 to start, answer, close, and/or redirect a call, put a call on hold, and/or add a user to an ongoing call, etc.

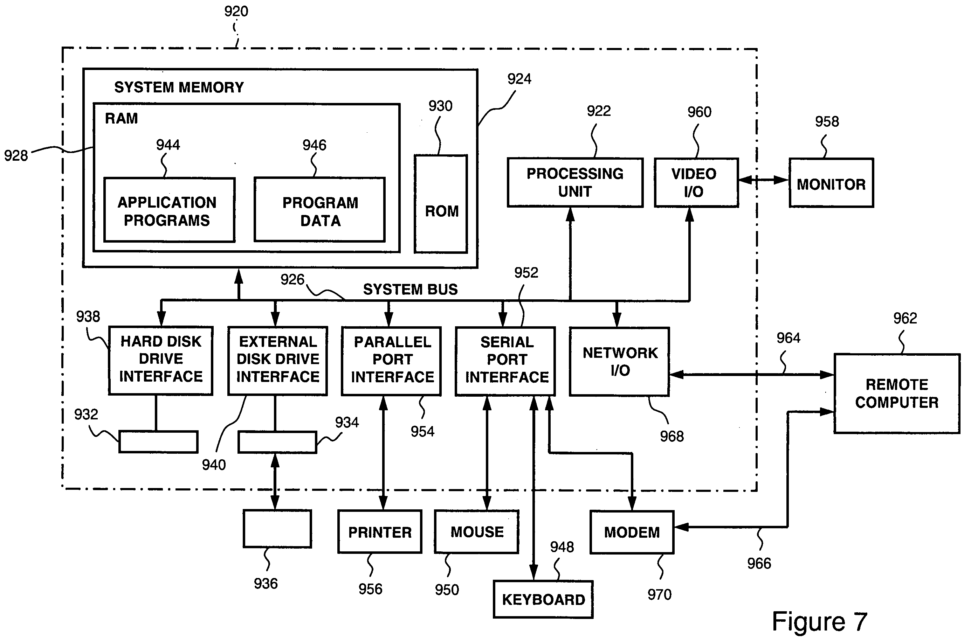

**Figure 7** shows an exemplary system for implementing the invention including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and nonvolatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for enabling presence and remote call control services between client devices served by different SIP servers, as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figs. 1 to 6E.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. Fig. 7 depicts the computer environment networked with remote computer 962. The remote computer 962 may be another computing environment such as a server, a router, a network PC, a peer device or other common network node, and may include many or all of the elements described above relative to the computing environment 920. The logical connections depicted in Fig. 7 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the method for optimization of evaluation of a policy (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for enabling presence and remote call control services between client devices served by different SIP servers.

### List of Reference Numerals

- 10: adaptation system
- 100: adaptation proxy
- 101, 102, 103, 104: communication protocol
- 110: presence handling
- 111: service request
- 120: CSTA gateway
- 130: call handling
- 140: presence integrator
- 150: translation protocol
- 152: translation rules
- 160: SIP adaptor
- 170: proxy
- 172: inbound interface
- 174: outbound interface
- 176: core component
- 178: repository
- 200, 300: VoIP domain
- 210: first SIP server
- 211: notify message
- 212: call control request
- 213: call control result
- 220, 230: first client device
- 221: call state change message
- 310: second SIP server
- 312: call control request
- 313: call control result
- 320, 330, 340: second client device
- 321: notify message
- 322: GUI for second client device
- 324: pop-up window in GUI for second client device
- 410, 420, 430: user
- 920: conventional computing environment
- 922: processing unit
- 924: system memory
- 926: system bus
- 928: random access memory (RAM)
- 930: read only memory (ROM)
- 932: hard disk drive
- 934: external disk drive
- 936: removable disk
- 938: hard disk drive interface
- 940: external disk drive interface
- 944: one or more application programs
- 946: program data
- 948: keyboard
- 950: mouse
- 952: serial port interface
- 954: parallel port interface
- 956: printer
- 958: monitor
- 960: video input/output
- 962: remote computer
- 964: local area network (LAN)
- 966: wide area network (WAN)
- 968: network I/O
- 970: a modem

## Claims

1. Adaptation proxy (100) integrable into a computer system (10) for enabling presence and remote call control services between client devices (220, 230, 320, 330, 340) served by different SIP servers (210, 310),
wherein the SIP servers (210, 310) are different from each other in that they operate on different platforms and/or support different SIP messaging protocols, the adaptation proxy (100) for message conversion between different VoIP domains, wherein a first VoIP domain of the different VoIP domains relates to a unit comprising a first SIP server (210) of the SIP servers (210, 310) and a first client device (220, 230) of the client devices (220, 230, 320, 330, 340) and wherein a second VoIP domain of the different VoIP domains relates to a unit comprising a second SIP server (310) of the SIP servers (210, 310) and a second client device (320, 330, 340) of the client devices (220, 230, 320, 330, 340);
the adaptation proxy (100) comprising:
an SIP adaptor (160) operable to transform and to transport SIP messages between the first client device (220, 230) and the second client device (320, 330, 340) served by the first SIP server (210) and the second SIP server (310), respectively;
**characterized in that** the adaptation proxy further comprise:
a CSTA gateway (120) operable to convert a CSTA event (103: 312, 313) supported by the second SIP server (310) into a format (101; 212, 213) supported by the first SIP server (210), wherein the CSTA event (103; 312, 313) independently operates over the SIP messages to communicate remote control commands, and
a presence integrator (140) operable to notify a change to a call state of the first client device (220, 230) served by the first SIP server (210) to the second SIP server (310) after having performed a mapping between the changed call state and a corresponding presence state of the second client device (320, 330, 340) served by the second SIP server (310) so as to integrate presence information of the first client device (220, 230) and the second client device (320, 330, 340);
wherein said notification is achieved by receiving a SIP message from the first SIP server (210) comprising the changed call state, to perform said mapping and to send a SIP message to the second SIP server (310) comprising the corresponding presence state;
wherein the presence integrator (140) is further operable to perform the mapping between the call state and the presence state by accessing a table comprising an assignment of possible call state values for the call state with corresponding possible presence state values for the presence state in order to associate the call state with the corresponding presence state.

2. Adaptation proxy according to claim 1, wherein the CSTA event (103; 312, 313) is sent from the second client device (320, 330, 340) to control calls at the remotely associated first client device (220, 230).

3. Adaptation proxy according to any one of the preceding claims, wherein the first client device (220, 230) and the second client device (320, 330, 340) are remotely associated and assigned to a user (410, 420, 430) in a buddy list associated with the second client device (320, 330, 340) served by the second SIP server (310).

4. Adaptation proxy according to claim 3, wherein the second SIP server (310) is operable to:
integrate the change to the call state, which is mapped to the corresponding presence state by the presence integrator (140), with state data of the second client device (320, 330, 340) and to notify said change to at least one further user (420, 430) in the buddy list.

5. Adaptation proxy according to claim 3 or 4, wherein the buddy list is displayed to the user (410, 420, 430) through a GUI (322) of the second client device (320, 330, 340).

6. Adaptation proxy according to any one of the preceding claims, wherein the first SIP server (210) is a standard VoIP server and the first client device (220, 230) is a corresponding hard-phone served by the VoIP server; and
wherein the second SIP server (310) is a presence server and the second client device (320, 330, 340) is a corresponding instant messaging clients

7. Computer system (10) for enabling presence and remote call control services between client devices (220, 230, 320, 330, 340) served by different SIP servers (210, 310), wherein the SIP servers (210, 310) are different from each other in that they operate on different platforms and/or support different SIP messaging protocols, the system comprising:
an adaptation proxy (100) according to any one of the preceding claims;
a first SIP server (210) which can be connected to the adaptation proxy (100);
a second SIP server (310 which can be connected to the adaptation proxy (100), wherein the first SIP server (210) and the second SIP server (310) operate on heterogeneous platforms and over heterogeneous messaging formats; and
a plurality of client devices (220, 230, 320, 330, 340), wherein at least a first (220, 230) of the client devices (220, 230, 320, 330, 340) is served by the first SIP server (210) and wherein at least a second (320, 330, 340) of the client devices (220, 230, 320, 330, 340) is served by the second SIP server (310).

8. Computer-implemented method in an adaptation proxy for enabling presence and remote call control services between client devices served by different SIP servers (210, 310),
wherein the SIP servers (210, 310) are different from each other in that they operate on different platforms and/or support different SIP messaging protocols, the method for message conversion between different VoID domains, wherein a first VoIP domain of the different VoIP domains relates to a unit comprising a first SIP server (210) of the SIP servers (210, 310) and a first client device (220, 230) of the client devices (220, 230, 320, 330, 340) and wherein a second VoIP domain of the different VoIP domains relates to a unit comprising a second SIP server (310) of the SIP servers (210, 310) and a second client device (320, 330, 340) of the client devices (220, 230, 320, 330, 340),
the computer-implemented method comprising an adaptation proxy (100) performing the step of:
transforming and to transporting SIP messages between the first client device (220, 230) and the second client device (320, 330, 340) served by the first SIP server (210) and the second SIP server (310), respectively;
**characterized in that** the adaptation proxy furthermore performs the steps of:
converting a CSTA event (103; 312, 313) supported by the second SIP server (310) into a format (101; 212, 213) supported by the first SIP server (210), wherein the CSTA event (103; 312, 313) independently operates over the SIP messages to communicate remote control commands; and
performing a mapping between a call state and a presence state by accessing a table comprising an assignment of possible call state values for the call state with corresponding possible presence state values for the presence state in order to associate the call state with the corresponding presence state;
notifying a change to the call state of the first client device (220, 230) served by the first SIP server (210) to the second SIP server (310) after having performed the mapping between the changed call state and the corresponding presence state of the second client device (320, 330, 340) served by the second SIP server (310) so as to integrate presence information of the first client device (220, 230) and the second client device (320, 330, 340),
wherein said notification comprises receiving a SIP message from the first SIP server (210) comprising the changed call state, performing said mapping and sending a SIP message to the second SIP server (310) comprising the corresponding presence state.

9. Method according to claim 8, wherein the CSTA event (103; 312, 313) is sent from the second client device (320, 330, 340) to control calls at the remotely associated first client device (220, 230).

10. Method according to any one of claim 8 or 9, wherein the first client device (220, 230) and the second client device (320, 330, 340) are remotely associated and assigned to a user (410, 420, 430) in a buddy list associated with the second client device (320, 330, 340) served by the second SIP server (310).

11. Method according to claim 10 further comprising:
integrating the change to the call state, which is mapped to the corresponding presence state by the presence integrator (140), with state data of the second client device (320, 330, 340) and to notify said change to at least one further user (420, 430) in the buddy list.

12. Method according to claim 10 or 11, further comprising:
displaying the buddy list to the user (410, 420, 430) through a GUI (322) of the second client device (320, 330, 340).

13. Computer program product comprising computer readable instructions, which when loaded and run in a computer and/or computer network system, causes the computer system and/or the computer network system to perform operations according to a method of any one of claims 8 to 12.

## Patentansprüche

1. Anpassungsproxy (100) der in ein Computersystem (10) integrierbar ist, zur Ermöglichung von Präsenz- und Remoteanruf-Kontrolldiensten zwischen Client-Geräten (220, 230, 320, 330, 340), die von unterschiedlichen SIP-Servern (210, 310) bedient werden,
wobei die SIP-Server (210, 310) voneinander unterschiedlich sind insofern sie auf unterschiedlichen Plattformen arbeiten und/oder unterschiedliche SIP-Nachrichtenprotokolle unterstützen, wobei der Anpassungsproxy (100) zur Nachrichtenkonvertierung zwischen unterschiedlichen VoIP-Domains dient, wobei ein erster VoIP-Domain der unterschiedlichen VoIP-Domains sich auf eine Einheit bezieht, die einen ersten SIP-Server (210) unter den SIP-Servern (210, 310) und ein erstes Client-Gerät (220, 230) unter den Client-Geräten (220, 230, 320, 330, 340) umfasst, und wobei ein zweiter VoIP-Domain der unterschiedlichen VoIP-Domains sich auf eine Einheit bezieht, die einen zweiten SIP-Server (310) unter den SIP-Servern (210, 310) und ein zweites Client-Gerät (320, 330, 340) unter den Client-Geräten (220, 230, 320, 330, 340) umfasst;
wobei der Anpassungsproxy (100) Folgendes umfasst:
einen SIP-Adapter (160), der zur Transformation und zum Transport von SIP-Nachrichten zwischen dem ersten Client-Gerät (220, 230) und dem zweiten Client-Gerät (320, 330, 340) betreibbar ist, die jeweils vom ersten SIP-Server (210) und vom zweiten SIP-Server (310) bedient werden;
**dadurch gekennzeichnet, dass** der Anpassungsproxy des Weiteren Folgendes umfasst:
ein CSTA-Gateway (120), das dazu betreibbar ist, ein vom zweiten SIP-Server (310) unterstütztes CSTA-Ereignis (103; 312, 313) in ein vom ersten SIP-Server (210) unterstütztes Format (101; 212, 213) zu konvertieren, wobei das CSTA-Ereignis (103; 312, 313) unabhängig über SIP-Nachrichten funktioniert, um Fernsteuerungsbefehle zu übermitteln; und
einen Präsenz-Integrator (140), der dazu betreibbar ist, eine Änderung in einem Verbindungszustand des ersten Client-Geräts (220, 230), das vom ersten SIP-Server (210) bedient wird, an den zweiten SIP-Server (310) mitzuteilen, nachdem ein *Mapping* zwischen dem veränderten Verbindungszustand und einem entsprechenden Präsenz-Zustand des vom zweiten SIP-Server (310) bedienten zweiten Client-Geräts (320, 330, 340) durchgeführt worden ist, sodass Präsenz-Informationen des ersten Client-Geräts (220, 230) und des zweiten Client-Geräts (320, 330, 340) integriert werden;
wobei das genannte Mitteilen erreicht wird, indem eine SIP-Nachricht, die den veränderten Verbindungszustand umfasst, vom ersten SIP-Server (210) empfangen wird, um das genannte *Mapping* durchzuführen, und um eine SIP-Nachricht an den zweiten SIP-Server (310) zu senden, die den entsprechenden Präsenz-Zustand umfasst;
wobei der Präsenz-Integrator (140) des Weiteren dazu betreibbar ist, das *Mapping* zwischen dem Verbindungszustand und dem Präsenz-Zustand durchzuführen, indem er auf eine Tabelle zugreift, die eine Zuordnung von möglichen Verbindungszustandswerten für den Verbindungszustand zu entsprechenden möglichen Präsenz-Zustandswerten für den Präsenz-Zustand umfasst, um den Verbindungszustand mit dem entsprechenden Präsenz-Zustand zu verknüpfen.

2. Anpassungsproxy nach Anspruch 1, wobei das CSTA-Ereignis (103; 312, 313) vom zweiten Client-Gerät (320, 330, 340) aus gesendet wird, um Anrufe im auf entfernte Weise verknüpften ersten Client-Gerät (220, 230) zu kontrollieren.

3. Anpassungsproxy nach irgendeinem der vorhergehenden Ansprüche, wobei das erste Client-Gerät (220, 230) und das zweite Client-Gerät (320, 330, 340) auf entfernte Weise verknüpft sind und einem Benutzer (410, 420, 430) zugeordnet sind, in einer Kontaktliste, die mit dem zweiten Client-Gerät (320, 330, 340) verknüpft ist, das vom zweiten SIP-Server (310) bedient wird.

4. Anpassungsproxy nach Anspruch 3, wobei der zweite SIP-Server (310) zu Folgendem betreibbar ist:
integrieren der Änderung des Verbindungszustands, der durch den Präsenz-Integrator (140) auf den entsprechenden Präsenz-Zustand abgebildet ist, mit Zustandsdaten des zweiten Client-Geräts (320, 330, 340) und mitteilen der genannten Änderung mindestens einem weiteren Benutzer (420, 430) in der Kontaktliste.

5. Anpassungsproxy nach Anspruch 3 oder 4, wobei die Kontaktliste dem Benutzer (410, 420, 430) über eine GUI (322) des zweiten Client-Geräts (320, 330, 340) angezeigt wird.

6. Anpassungsproxy nach irgendeinem der vorhergehenden Ansprüche, wobei der erste SIP-Server (210) ein Standard VoIP-Server ist und das erste Client-Gerät (220, 230) ein entsprechendes Festnetz-Telefon ist, das vom VoIP-Server bedient wird; und
wobei der zweite SIP-Server (310) ein Präsenz-Server ist und das zweite Client-Gerät (320, 330, 340) ein entsprechender *Instant-Messaging-Client* ist.

7. Computersystem (10) zur Ermöglichung von Präsenz- und Remoteanruf-Kontrolldiensten zwischen Client-Geräten (220, 230, 320, 330, 340), die von unterschiedlichen SIP-Servern (210, 310) bedient werden, wobei die SIP-Server (210, 310) voneinander unterschiedlich sind insofern sie auf unterschiedlichen Plattformen arbeiten und/oder unterschiedliche SIP-Nachrichtenprotokolle unterstützen, wobei das System Folgendes umfasst:
einen Anpassungsproxy (100) nach irgendeinem der vorhergehenden Ansprüche;
einen ersten SIP-Server (210), der mit dem Anpassungsproxy (100) verbunden werden kann;
einen zweiten SIP-Server (310), der mit dem Anpassungsproxy (100) verbunden werden kann, wobei der erste SIP-Server (210) und der zweite SIP-Server (310) mit heterogenen Plattformen betrieben werden und mit heterogenen Nachrichtenformaten; und
eine Vielzahl von Client-Geräten (220, 230, 320, 330, 340), wobei mindestens ein erstes (220, 230) unter den Client-Geräten (220, 230, 320, 330, 340) vom ersten SIP-Server (210) bedient wird und wobei mindestens ein zweites Client-Gerät (320, 330, 340) unter den Client-Geräten (220, 230, 320, 330, 340) vom zweiten SIP-Server (310) bedient wird.

8. Ein computerimplementiertes Verfahren in einem Anpassungsproxy zur Ermöglichung von Präsenz- und Remoteanruf-Kontrolldiensten zwischen Client-Geräten (220, 230, 320, 330, 340), die von unterschiedlichen SIP-Servern (210, 310) bedient werden,
wobei die SIP-Server (210, 310) voneinander unterschiedlich sind insofern sie auf unterschiedlichen Plattformen arbeiten und/oder unterschiedliche SIP-Nachrichtenprotokolle unterstützen, wobei das Verfahren zur Nachrichtenkonvertierung zwischen unterschiedlichen VoIP-Domains dient, wobei ein erster VoIP-Domain der unterschiedlichen VoIP-Domains sich auf eine Einheit bezieht, die einen ersten SIP-Server (210) unter den SIP-Servern (210, 310) und ein erstes Client-Gerät (220, 230) unter den Client-Geräten (220, 230, 320, 330, 340) umfasst, und wobei ein zweiter VoIP-Domain der unterschiedlichen VoIP-Domains sich auf eine Einheit bezieht, die einen zweiten SIP-Server (310) unter den SIP-Servern (210, 310) und ein zweites Client-Gerät (320, 330, 340) unter den Client-Geräten (220, 230, 320, 330, 340) umfasst,
wobei das computerimplementierte Verfahren einen Anpassungsproxy (100) umfasst, der die Folgendes Schritte ausführt:
transformieren und transportieren von SIP-Nachrichten zwischen dem ersten Client-Gerät (220, 230) und dem zweiten Client-Gerät (320, 330, 340), die jeweils vom ersten SIP-Server (210) und vom zweiten SIP-Server (310) bedient werden;
**dadurch gekennzeichnet, dass** der Anpassungsproxy des Weiteren die folgenden Schritte ausführt:
konvertieren eines CSTA-Ereignisses (103; 312, 313), das vom zweiten SIP-Server (310) unterstützt wird, in ein vom ersten SIP-Server (210) unterstütztes Format (101; 212, 213), wobei das CSTA-Ereignis (103; 312, 313) unabhängig über SIP-Nachrichten funktioniert, um Fernsteuerungsbefehle zu übermitteln; und
durchführen eines *Mappings* zwischen einem Verbindungszustand und einem Präsenz-Zustand durch den Zugriff auf eine Tabelle, die eine Zuordnung von möglichen Verbindungszustandswerten für den Verbindungszustand zu entsprechenden möglichen Präsenz-Zustandswerten für den Präsenz-Zustand umfasst, um den Verbindungszustand mit dem entsprechenden Präsenz-Zustand zu verknüpfen;
mitteilen einer Änderung im Verbindungszustand des ersten Client-Geräts (220, 230), das vom ersten SIP-Server (210) bedient wird, an den zweiten SIP-Server (310) mitzuteilen, nachdem das *Mapping* zwischen dem veränderten Verbindungszustand und dem entsprechenden Präsenz-Zustand des vom zweiten SIP-Server (310) bedienten zweiten Client-Geräts (320, 330, 340) durchgeführt worden ist, sodass Präsenz-Informationen des ersten Client-Geräts (220, 230) und des zweiten Client-Geräts (320, 330, 340) integriert werden;
wobei die genannte Mitteilung das Empfangen einer SIP-Nachricht vom ersten SIP-Server (210) umfasst, die den veränderten Verbindungszustand umfasst, die das genannte *Mapping* durchführt, und das Senden einer SIP-Nachricht an den zweiten SIP-Server (310), die den entsprechenden Präsenz-Zustand umfasst;

9. Verfahren nach Anspruch 8, wobei das CSTA-Ereignis (103; 312, 313) vom zweiten Client-Gerät (320, 330, 340) aus gesendet wird, um Anrufe im auf entfernte Weise verknüpften ersten Client-Gerät (220, 230) zu kontrollieren.

10. Verfahren nach Anspruch 8 oder 9, wobei das erste Client-Gerät (220, 230) und das zweite Client-Gerät (320, 330, 340) auf entfernte Weise verknüpft sind und einem Benutzer (410, 420, 430) zugeordnet sind, in einer Kontaktliste, die mit dem zweiten Client-Gerät (320, 330, 340) verknüpft ist, das vom zweiten SIP-Server (310) bedient wird.

11. Verfahren nach Anspruch 10, das des Weiteren Folgendes umfasst:
integrieren der Änderung des Verbindungszustands, der durch den Präsenz-Integrator (140) auf den entsprechenden Präsenz-Zustand abgebildet ist, mit Zustandsdaten des zweiten Client-Geräts (320, 330, 340), und mitteilen der genannten Änderung mindestens einem weiteren Benutzer (420, 430) in der Kontaktliste.

12. Verfahren nach Anspruch 10 oder 11, das des Weiteren Folgendes umfasst:
anzeigen der Kontaktliste dem Benutzer (410, 420, 430) über eine GUI (322) des zweiten Client-Geräts (320, 330, 340).

13. Computerprogrammprodukt, das computerlesbare Anweisungen umfasst, die, wenn sie in einen Computer und/oder in ein Computernetzwerksystem geladen und dort ausgeführt werden, das Computersystem und/oder das Computernetzwerksystem dazu bringen, Operationen entsprechend einem Verfahren nach irgendeinem der Ansprüche von 8 bis 12 auszuführen.

## Revendications

1. Un proxy d'adaptation (100) intégrable dans un système informatique (10) rendant possibles des services de contrôle de présence et d'appel à distance entre des dispositifs client (220, 230, 320, 330, 340) desservis par différents serveurs SIP (210, 310),
sachant que les serveurs SIP (210, 310) sont différents les uns des autres en ce qu'ils fonctionnent sur différentes plates-formes et/ou qu'ils supportent différents protocoles de messagerie SIP, le proxy d'adaptation (100) étant prévu pour une conversion de message entre différents domaines VoIP, sachant qu'un premier domaine VoIP parmi les différents domaines VoIP porte sur une unité comprenant un premier serveur SIP (210) parmi les serveurs SIP (210, 310) et un premier dispositif client (220, 230) parmi les dispositifs client (220, 230, 320, 330, 340), et sachant qu'un deuxième domaine VoIP parmi les différents domaines VoIP porte sur une unité comprenant un deuxième serveur SIP (310) parmi les serveurs SIP (210, 310) et un deuxième dispositif client (320, 330, 340) parmi les dispositifs client (220, 230, 320, 330, 340) ;
le proxy d'adaptation (100) comprenant :
un adaptateur SIP (160) servant à transformer et à transporter des messages SIP entre le premier dispositif client (220, 230) et le deuxième dispositif client (320, 330, 340) respectivement desservis par le premier serveur SIP (210) et le deuxième serveur SIP (310) ;
**caractérisé en ce que** le proxy d'adaptation comprend en outre :
une passerelle CSTA (120) servant à convertir un événement CSTA (103, 312, 313) supporté par le deuxième serveur SIP (310) en un format (101 ; 212, 213) supporté par le premier serveur SIP (210), sachant que l'événement CSTA (103, 312, 313) fonctionne indépendamment par l'intermédiaire des messages SIP pour communiquer des commandes de contrôle à distance ; et
un intégrateur de présence (*presence integrator*) (140) servant à notifier un changement d'un état d'appel du premier dispositif client (220, 230), desservi par le premier serveur SIP (210), au deuxième serveur SIP (310) après avoir effectué une mise en correspondance (*mapping*) entre l'état d'appel changé et un état de présence correspondant du deuxième dispositif client (320, 330, 340) desservi par le deuxième serveur SIP (310) de manière à intégrer des informations de présence du premier dispositif client (220, 230) et du deuxième dispositif client (320, 330, 340) ;
sachant que ladite notification est obtenue par la réception d'un message SIP de la part du premier serveur SIP (210) comprenant l'état d'appel changé, pour effectuer ladite mise en correspondance et pour envoyer un message SIP au deuxième serveur SIP (310) comprenant l'état de présence correspondant ;
sachant que l'intégrateur de présence (140) sert en outre à effectuer la mise en correspondance entre l'état d'appel et l'état de présence en accédant à une table comprenant une mise en correspondance de valeurs d'état d'appel possibles pour l'état d'appel avec des correspondantes valeurs d'état de présence possibles pour l'état de présence afin d'associer l'état d'appel à l'état de présence correspondant.

2. Le proxy d'adaptation d'après la revendication 1, sachant que l'événement CSTA (103, 312, 313) est envoyé du deuxième dispositif client (320, 330, 340) pour contrôler des appels auprès du premier dispositif client (220, 230) associé à distance.

3. Le proxy d'adaptation d'après une quelconque des revendications précédentes, sachant que le premier dispositif client (220, 230) et le deuxième dispositif client (320, 330, 340) sont associés à distance et attribués à un utilisateur (410, 420, 430) dans une liste de contacts associée au deuxième dispositif client (320, 330, 340) desservi par le deuxième serveur SIP (310).

4. Le proxy d'adaptation d'après la revendication 3, sachant que le deuxième serveur SIP (310) est conçu pour
intégrer le changement d'état d'appel, qui est mis en correspondance avec l'état de présence correspondant par l'intégrateur de présence (140), avec des données d'état du deuxième dispositif client (320, 330, 340), et pour notifier ledit changement à au moins un autre utilisateur (420, 430) dans la liste de contacts.

5. Le proxy d'adaptation d'après la revendication 3 ou 4, sachant que la liste de contacts est affichée pour l'utilisateur (410, 420, 430) grâce à une IUG (322) du deuxième dispositif client (320, 330, 340).

6. Le proxy d'adaptation d'après une quelconque des revendication précédentes, sachant que le premier serveur SIP (210) est un serveur VoIP standard et que le premier dispositif client (220, 230) est un poste fixe correspondant desservi par le serveur VoIP ; et
sachant que le deuxième serveur SIP (310) est un serveur de présence et que le deuxième dispositif client (320, 330, 340) est un client de messagerie instantanée correspondant.

7. Un système informatique (10) pour rendre possibles des services de contrôle de présence et d'appel à distance entre des dispositifs client (220, 230, 320, 330, 340) desservis par différents serveurs SIP (210, 310), sachant que les serveurs SIP (210, 310) sont différents les uns des autres en ce qu'ils fonctionnent sur différentes plates-formes et/ou qu'ils supportent différents protocoles de messagerie SIP, le système comprenant :
un proxy d'adaptation (100) d'après une quelconque des revendications précédentes ;
un premier serveur SIP (210) pouvant être connecté au proxy d'adaptation (100);
un deuxième serveur SIP (310) pouvant être connecté au proxy d'adaptation (100) ; sachant que le premier serveur SIP (210) et le deuxième serveur SIP (310) fonctionnent dans le cadre de plates-formes hétérogènes et par de formats de messagerie hétérogènes ; et
une pluralité de dispositifs client (220, 230, 320, 330, 340), sachant qu'au moins un premier (220, 230) parmi les dispositifs client (220, 230, 320, 330, 340) est desservi par le premier serveur SIP (210), et sachant qu'au moins un deuxième (320, 330, 340) parmi les dispositifs client (220, 230, 320, 330, 340) est desservi par le deuxième serveur SIP (310).

8. Un procédé mis en oeuvre par ordinateur dans un proxy d'adaptation pour rendre possibles des services de contrôle de présence et d'appel à distance entre des dispositifs client desservis par différents serveurs SIP (210, 310),
sachant que les serveurs SIP (210, 310) sont différents les uns des autres en ce qu'ils fonctionnent sur différentes plates-formes et/ou qu'ils supportent différents protocoles de messagerie SIP, le procédé de conversion de message étant prévu entre différents domaines VoIP, sachant qu'un premier domaine VoIP parmi les différents domaines VoIP porte sur une unité comprenant un premier serveur SIP (210) parmi les serveurs SIP (210, 310) et un premier dispositif client (220, 230) parmi les dispositifs client (220, 230, 320, 330, 340), et sachant qu'un deuxième domaine VoIP parmi les différents domaines VoIP porte sur une unité comprenant un deuxième serveur SIP (310) parmi les serveurs SIP (210, 310) et un deuxième dispositif client (320, 330, 340) parmi les dispositifs client (220, 230, 320, 330, 340) ;
le procédé mis en oeuvre par ordinateur comprenant un proxy d'adaptation (100) effectuant les étapes suivantes consistant à :
transformer et à transporter des messages SIP entre le premier dispositif client (220, 230) et le deuxième dispositif client (320, 330, 340) respectivement desservis par le premier serveur SIP (210) et le deuxième serveur SIP (310) ;
**caractérisé en ce que** le proxy d'adaptation effectue en outre les étapes suivantes consistant à :
convertir un événement CSTA (103, 312, 313) supporté par le deuxième serveur SIP (310) en un format (101 ; 212, 213) supporté par le premier serveur SIP (210), sachant que l'événement CSTA (103, 312, 313) fonctionne indépendamment par l'intermédiaire des messages SIP pour communiquer des commandes de contrôle à distance ; et
effectuer une mise en correspondance (*mapping*) entre un état d'appel et un état de présence en accédant à une table comprenant une mise en correspondance de valeurs d'état d'appel possibles pour l'état d'appel avec des correspondantes valeurs d'état de présence possibles pour l'état de présence afin d'associer l'état d'appel à l'état de présence correspondant ;
notifier un changement de l'état d'appel du premier dispositif client (220, 230), desservi par le premier serveur SIP (210), au deuxième serveur SIP (310) après avoir effectué une mise en correspondance entre l'état d'appel changé et l'état de présence correspondant du deuxième dispositif client (320, 330, 340) desservi par le deuxième serveur SIP (310) de manière à intégrer des informations de présence du premier dispositif client (220, 230) et du deuxième dispositif client (320, 330, 340) ;
sachant que ladite notification comprend le fait de recevoir un message SIP de la part du premier serveur SIP (210) comprenant l'état d'appel changé, d'effectuer ladite mise en correspondance et d'envoyer un message SIP au deuxième serveur SIP (310) comprenant l'état de présence correspondant.

9. Procédé d'après la revendication 8, sachant que l'événement CSTA (103, 312, 313) est envoyé du deuxième dispositif client (320, 330, 340) pour contrôler des appels auprès du premier dispositif client (220, 230) associé à distance.

10. Procédé d'après une quelconque des revendications 8 ou 9, sachant que le premier dispositif client (220, 230) et le deuxième dispositif client (320, 330, 340) sont associés à distance et attribués à un utilisateur (410, 420, 430) dans une liste de contacts associée au deuxième dispositif client (320, 330, 340) desservi par le deuxième serveur SIP (310).

11. Procédé d'après la revendication 10, comprenant en outre le fait de :
intégrer le changement d'état d'appel, qui est mis en correspondance avec l'état de présence correspondant par l'intégrateur de présence (140), avec des données d'état du deuxième dispositif client (320, 330, 340), et pour notifier ledit changement à au moins un autre utilisateur (420, 430) dans la liste de contacts.

12. Procédé d'après la revendication 10 ou 11, comprenant en outre le fait de :
afficher la liste de contacts pour l'utilisateur (410, 420, 430) grâce à une IUG (322) du deuxième dispositif client (320, 330, 340).

13. Produit programme informatique comprenant des instructions lisibles par ordinateur, lesquelles, quand elles sont chargées et exécutées dans un ordinateur et/ou dans un système de réseau informatique, amènent le système informatique et/ou le système de réseau informatique à effectuer des opérations conformément à un procédé d'après une quelconque des revendications de 8 à 12.
